# EUROPÄISCHE PATENTSCHRIFT

(11) **EP 1 202 921 B1**
(45) Veröffentlichungstag und Bekanntmachung des Hinweises auf die Patenterteilung: **08.12.2004**
(21) Anmeldenummer: 00943461.4
(22) Anmeldetag: 10.07.2000
(51) Int. Cl.: B65G 13/10, B65G 47/54

(54) **ABLENKVORRICHTUNG FÜR EINE FÖRDEREINRICHTUNG**
DEVIATING DEVICE FOR A CONVEYOR
DISPOSITIF DE DEVIATION POUR CONVOYEUR

(30) Priorität: 14.07.1999 AT 122199
(43) Veröffentlichungstag der Anmeldung: 08.05.2002
(73) Patentinhaber: KNAPP LOGISTIK AUTOMATION GMBH., 8075 Hart bei Graz (AT)
(72) Erfinder: FREUDELSPERGER, Karl, A-8075 Hart bei Graz (AT)
(74) Vertreter: Weinzinger, Arnulf, Dipl.-Ing.
(86) Internationale Anmeldenummer: PCT/AT2000/000190
(87) Internationale Veröffentlichungsnummer: WO 2001/005688

(56) Entgegenhaltungen:
- EP-A- 0 251 391
- EP-A- 0 463 878
- WO-A-98/50297
- DE-A- 19 800 549
- DE-U- 29 908 236
- FR-A- 2 310 942
- US-A- 4 747 477
- PATENT ABSTRACTS OF JAPAN vol. 008, no. 128 (M-302), 14. Juni 1984 (1984-06-14) & JP 59 031211 A (ITSUHITO MIZUNO), 20. Februar 1984 (1984-02-20)
- PATENT ABSTRACTS OF JAPAN vol. 005, no. 068 (M-067), 8. Mai 1981 (1981-05-08) & JP 56 018163 A (POWER REACTOR & NUCLEAR FUEL DEV CORP), 20. Februar 1981 (1981-02-20)

## Beschreibung

Die Erfindung betrifft eine Ablenkvorrichtung für eine, eine Förderebene definierende Fördereinrichtung, z.B. eine Treibrollenbahn, zum Ablenken von Fördergütern, beispielsweise Behältern, gemäß dem einleitenden Teil von Anspruch 1. Eine solche Ablenkvorrichtung ist aus der US 4 747 477 A bekannt.

Ablenkvorrichtungen für Treibrollenbahnen dienen beispielsweise dazu, aus einem Strom geförderter Güter bestimmte Fördergüter in eine bestimmte Richtung abzulenken und auf eine andere Förderstrecke überzuführen. Es sind sowohl Röllchenweichen bekannt, bei denen die Röllchen zur Richtungsänderung um vertikale Achsen geschwenkt werden, als auch Weichen, bei denen zur Förderrichtung schräggestellte Röllchen beim Aktivieren der Ablenkvorrichtung über das Niveau der Förderebene gehoben werden, um ein Ablenken des Fördergutes herbeizuführen.

Aus der DE 1 297 022 B ist eine Röllchenbahnweiche für Stückgut, Behälter oder dgl. unter Verwendung verschwenkbarer oder anhebbarer angetriebener Reibrollen bekannt. Dabei ist auch vorgesehen, eine Reihe von Reibrollen über Lagerböcke an einem gemeinsamen Träger anzubringen, welcher am Grundrahmen der Fördereinrichtung mittels Führungsbolzen höhenverstellbar geführt ist. Zur Höhenverstellung des Trägers ist eine Welle mit Nocken am Grundrahmen der Fördereinrichtung gelagert. Von Nachteil ist hierbei vor allem, dass ein nachträgliches Ausrüsten oder ein auf bestimmte Verwendungen abzielendes Umrüsten von bestehenden Fördereinrichtungen nur schwer möglich ist, da die einzelnen Komponenten für sich am Grundrahmen der Fördereinrichtung angebracht sind und dabei aufeinander einjustiert werden müssen.

In der US 4 747 477 A ist im Einzelnen eine Hubvorrichtung für ein Rollendeck zur Umlenkung einer Palette gezeigt, wobei das Rollendeck aus einem Grundrahmen und einem gegen diesen bewegbaren Hubrahmen besteht. Der Hubrahmen ist mit Hilfe von Hubbälgen höhenverstellbar, die zwischen dem Hubrahmen und einem Träger des Grundrahmens angeordnet sind. Die gesamte Ablenkvorrichtung ist jedoch zur Anordnung neben einer Fördereinrichtung mit einem Basisrahmen vorgesehen.

In der EP 0 463 878 A1 ist ein modulares Fördersystem geoffenbart, bei dem mehrere Fördereinheiten vorgesehen sind, die jeweils eine Sensoreinheit aufweisen. Die Ablenkröllchen ragen in einer Ablenkstellung über Treibrollen hinaus; ein Antrieb der Ablenkröllchen ist nicht geoffenbart.

In der WO 98/50297 A ist eine Ablenkvorrichtung gezeigt, bei der zwischen zwei Antriebsrollen eine Fördereinrichtung vorgesehen ist, um Fördergüter in Richtung einer zweiten Fördereinrichtung abzulenken. Die Ablenkvorrichtung weist zur Erzielung einer Drehschwenkbewegung der Ablenkröllchen eine Konstruktion auf, bei welcher mit Hilfe von zwei im Wesentlichen horizontal wirkenden Hubzylindern die Röllchen über das Niveau des Förderbandes gehoben und verschwenkt werden können.

Aufgabe der Erfindung ist es, eine Ablenkvorrichtung der eingangs angegebenen Art zu schaffen, die vielseitig und flexibel von ihren Einsatzmöglichkeiten und daher nicht nur für eine ganz bestimmte Aufgabe einsetzbar ist, sondern je nach Bedarf in die Treibrollenbahn oder dergleichen integriert werden kann. Dabei soll auch ein problemloses Einbauen in bestehende Fördertechniken und die Verwendung zum Ablenken von Fördergut unterschiedlicher Länge bzw. Breite möglich sein. Darüber hinaus sollen ein Abschieben oder Ablenken auf eine von der ursprünglichen Förderstrecke abzweigende Transporteinrichtung, ein Realisieren von Kurven und Kehren, ein Wenden des Förderguts um seine vertikale Achse und auch ein Ablenken auf der ursprünglichen Förderstrecke zu einer bestimmten Längsseite hin möglich sein.

Diese Aufgabe wird erfindungsgemäß durch die in Anspruch 1 definierten Merkmale gelöst.

Das erfindungsgemäß vorgesehene gesonderte Modul, das einen eigenen Modul-Rahmen und einen eigenen Träger aufweist, kann somit als eigenständige Baueinheit vorbereitet und danach bei Bedarf in vorteilhafter Weise sehr flexibel an einer beliebigen Stelle einer Förder- bzw. Treibrollenbahn integriert werden. Darüber hinaus kann eine beliebige Anzahl von derartigen Modulen hintereinander in der Förder- bzw. Treibrollenbahn vorgesehen sein. Ein solcher Einbau an beliebigen Stellen ist insbesondere dann möglich, wenn die Fördereinrichtung eine Treibrollenbahn ist, da ein Modul dann jeweils im Zwischenraum zwischen zwei Treibrollen eingebaut werden kann; hierzu kann es einfach mit seinem Modul-Rahmen an vorgegebenen Stellen am Grundrahmen der Treibrollenbahn angeschraubt, unter Umständen sogar mittels Einhäng- oder Schnappverbindungen fixiert werden. Vorteilhafterweise kann die Anzahl der eingebauten Ablenk-Modulelemente der Länge bzw. Breite des abzulenkenden Fördergutes entsprechend angepasst werden. Im Fall von Bandförderern ist ein Einbau an einer Stelle zwischen zwei aufeinanderfolgenden Förderbändern möglich.

Für eine Ausgestaltung, des Moduls, bei der dessen Ablenk-Röllchen auf einfache Weise zeitweise über die Förderebenen der Fördereinrichtung angehoben und somit gezielt bestimmte Güter mit Hilfe des Moduls aus den Förderbahnen abgelenkt werden können, ist es vorteilhaft, wenn zwischen dem Röllchen-Träger und der Antriebsrolle ein den Hubantrieb tragender Grundträger fest angebracht ist.

Jedes Modul kann in vorteilhafter Weise unabhängig von den übrigen Modulelementen in der Treibrollenbahn sein, auch was seine Ansteuerung betrifft. Für das Heben bzw. Senken des Trägers mit der Röllchenreihe ist bevorzugt ein Balgzylinder vorgesehen, der auf dem mit dem Modulrahmen fest verbundenen Grundträger befestigt ist.

Die Röllchen werden vorzugsweise über Rundriemen drehend angetrieben, die über die im Modul-Rahmen drehbar gelagerte Antriebsrolle angetrieben werden. Die Antriebsrolle kann als Sickenrolle ausgeführt sein, um den jeweiligen Rundriemen in seinem Lauf auf der Antriebsrolle zu führen und die Rutschsicherheit zu erhöhen.

Im Hinblick auf eine einfache, preiswerte Konstruktion des Moduls ist für den Antrieb der Antriebsrolle mit Vorteil ein Antriebsriemen vorgesehen, der auch die Treibrollen der Treibrollenbahn antreibt. Dabei können zur Erzielung der erforderlichen Umschlingungswinkel auch Spann- bzw. Umlenkrollen zwischen den Antriebsrollen angeordnet werden.

Für eine einfache Konstruktion und einen zuverlässigen Antrieb ist es vorteilhaft, wenn als Antriebsriemen ein Flachriemen vorgesehen ist.

Die Röllchen sind an ihrem Umfang in vorteilhafter Weise mit einem O-Ring ausgebildet; die O-Ringe kommen mit dem Fördergut in Kontakt, um die gewünschte Ablenkwirkung zu erzielen, wobei eine ausreichende Reibung sichergestellt ist.

Die dem Modul benachbarten Treibrollen sind vorzugsweise Sickenrollen, die über Rundriemen angetrieben werden. Wenn der Antriebsriemen an den Stellen der Treibrollenbahn, an denen Module integriert sind, die Antriebsrollen der Module antreibt, ist es günstig, für die Tragrollen der Treibrollenbahn an diesen Stellen - die nicht über den Antriebsriemen selbst angetrieben werden, da dieser über die Antriebsrollen der Module läuft - spezielle Sickenrollen vorzusehen, auf die das notwendige Drehmoment von jenen den Modul(en) nächstgelegenen Tragrollen, die noch vom Flachriemen angetrieben werden, über die Rundriemen übertragen wird.

Die Endpositionen des Trägers des Moduls sind durch mit dem Modulelement-Rahmen verbundene einstellbare Anschläge definiert. Dadurch ist es auf einfache Weise möglich, bevorzugt den Träger in seiner Endhöhe ohne Betätigung des Hubantriebs manuell so einzustellen, dass die Röllchen bzw. die O-Ringe im angehobenen Zustand des Trägers im gewünschten Ausmaß über die, z.B. von den Tragrollen, definierte Förderebene hinausragen.

Es ist auch aufgrund der vorteilhaften modularen Bauform der Ablenkeinrichtung möglich, mehrere Module mit voneinander unabhängig höhenverstellbar angebrachten Trägern, jeweils in eigenen Modulrahmen, vorzusehen; dadurch kann der jeweiligen Größe des abzulenkenden Fördergutes problemlos Rechnung getragen werden, und es ist auch möglich, eine günstige Ansteuerung der gesamten Ablenkeinrichtung zu erreichen. Zu diesem Zweck kann dem bzw. jedem Modul eine Triggerlichtschranke zur Ansteuerung des Hubantriebes des Trägers zugeordnet werden; dadurch ist es beispielsweise möglich, alle Träger der Module gleichzeitig zu heben und so das Fördergut abzulenken. Es ist aber auch, um den Durchsatz zu erhöhen, dennoch denkbar ein Modul nach dem anderen zeitlich versetzt anzusteuern. Es kann aber zur Vereinfachung des Steuerkreises auch nur eine gemeinsame Triggerlichtschranke zur, gegebenenfalls zeitlich aufeinanderfolgenden, Ansteuerung der Hubantriebe der Träger von mehreren Modulen vorgesehen sein. Bei dieser Ausbildung werden somit die Module gruppenweise von der gemeinsamen Triggerlichtschranke her - die das Ankommen des abzulenkenden Förderguts erfasst - angesteuert. Dabei ist es auch denkbar, mit einer gemeinsamen Triggerlichtschranke mehrere Module in einer vorgegebenen Abfolge, mit einer zeitlichen Verzögerung entsprechend der Fördergut-Geschwindigkeit, anzusteuern.

Es ist weiters günstig, wenn die Röllchen um zu ihren Drehachsen senkrechte Achsen verdrehbar am Träger angebracht und so, unter verstellbaren Winkeln (fest) einstellbar sind. Daher können auch mehrere Modulelemente hintereinander in die Treibrollenbahn integriert werden, die jeweils einen anderen Ablenkwinkel aufweisen. Somit können in vorteilhafter Weise bei starken Ablenkungen die Ablenkwinkel von sehr geringen Schrägstellungen sukzessive vergrößert werden, um ein sanftes Ablenken des Fördergutes zu erreichen.

Der Winkel der Röllchen zur Förderrichtung kann in einer Normal-Betriebsstellung ca. 35° betragen. Dieser Winkel hat sich für eine Weichenfunktion als besonders günstig erwiesen.

Die Ablenkvorrichtung kann zum Verschieben, nämlich zum Ausoder Einschleusen, des Fördergutes über eine zur Treibrollenbahn schräge Förderstrecke verwendet werden.

Ebenfalls kann die Ablenkvorrichtung, bei unterschiedlichen Ablenkwinkeln, zum Überschieben des Fördergutes auf eine zur ursprünglichen Treibrollenbahn parallel verlaufende Rollenbahn verwendet werden.

Darüber hinaus kann die Ablenkvorrichtung auch zum Abschieben oder Einschleusen des Fördergutes in einer zur Förderrichtung der Treibrollenbahn im Wesentlichen rechtwinkelig verlaufenden Richtung verwendet werden.

Oft ist es auch notwendig, das Fördergut zu einer bestimmten Längsseite der Treibrollenbahn zu fördern, um z.B. das Einlesen eines Barcodes vorzunehmen. Die erfindungsgemäße Ablenkvorrichtung kann in vorteilhafter Weise zum Verschieben des Fördergutes zu einer bestimmten Längsseite der Treibrollenbahn hin verwendet werden. Dabei kann auch mit Vorteil auf der Längsseite, zu der hin die Verschiebung des Fördergutes erfolgt, eine Anschlageinrichtung, vorgesehen sein.

Für eine konstruktiv einfache Gestaltung und einen sicheren Anschlag über eine bestimmte Länge ist es günstig, wenn als Anschlageinrichtung eine Schiene vorgesehen ist.

Eine weitere vorteilhafte Anwendung der modulförmigen Ablenkvorrichtung besteht in der Bildung eines Kurvenbereichs als Übergang zwischen zwei unter einem Winkel zueinander angeordneten Förderstrecken. Um den Anforderungen, die in der Praxis häufig auftreten, nachzukommen, ist es auch vorteilhaft, wenn die Förderstrecken um 90° bzw. 180° zueinander verdreht angeordnet sind.

Auch ist es günstig, die modulförmige Ablenkvorrichtung zum Wenden des Fördergutes um 180° um seine vertikale Achse zu verwenden, wobei ein Modul mit seinem Träger parallel zur Haupt-Förderrichtung zwischen zwei parallelen Förderstrecken angeordnet ist.

Die Erfindung wird nachstehend anhand von in der Zeichnung dargestellten, bevorzugten Ausführungsbeispielen, auf die sie jedoch nicht beschränkt sein soll, noch weiter erläutert. Im Einzelnen zeigen in der Zeichnung:
Fig. 1 eine Ansicht eines Ablenk-Vorrichtungs-Moduls;
Fig. 2 eine Draufsicht auf dieses Modul;
Fig. 3 einen Querschnitt gemäß der Linie III-III in Fig.1;
Fig. 4 eine Schnittdarstellung eines Röllchens samt Halterung gemäß der Linie IV - IV in Fig. 2;
Fig. 5 eine schematische Teil-Draufsicht auf eine Treibrollenbahn mit drei Modulen;
Fig. 6 einen schematischen Längsschnitt durch diese Treibrollenbahn mit drei Modulen;
Fig. 7 schematisch in einer Draufsicht die Verwendung von Modulen bei einer Überführung von Fördergut über eine um zur Förderrichtung um ca. 30° schräggestellte Strecke;
Fig. 8 schematisch in einer Draufsicht die Verwendung von Modulen bei der Überführung von Fördergut auf eine parallele Förderstrecke;
Fig. 9 schematisch in einer Draufsicht die Verwendung von Modulen zur Umlenkung des Fördergutes um 90°;
Fig. 10 schematisch in einer Draufsicht die Verwendung von Modulen zum Verschieben von Fördergut zu einer bestimmten Längsseite der Treibrollenbahn hin;
Fig. 11 schematisch in einer Draufsicht die Verwendung von Modulen zum Realisieren einer 90°-Kurve für das Fördergut;
Fig. 12 schematisch in einer Draufsicht die Verwendung von Modulen zur Realisierung einer 180°-Kehre, unter Überführung des Förderguts auf eine parallel in Gegenrichtung fördernde Strecke;
Fig. 13 schematisch in einer Draufsicht die Verwendung von Modulen inklusive eines Moduls, das der Länge nach zwischen zwei Förderstrecken vorgesehen ist, zum 180°-Wenden und Überführen von Fördergut auf eine parallele Förderstrecke;
Fig. 14 schematisch in einer Draufsicht die Verwendung von längs eingebauten Modulen inklusive eines zwischen zwei Förderstrecken längs eingebauten Moduls bei der Überführung von Fördergut unter 90° auf eine parallele Förderstrecke;
Fig. 15 eine Ansicht ähnlich Fig. 1 eines Moduls mit zusätzlichen Umlenkröllchen für die Rundriemen;
Fig. 16 eine Draufsicht auf das Modul gemäß Fig. 15; und

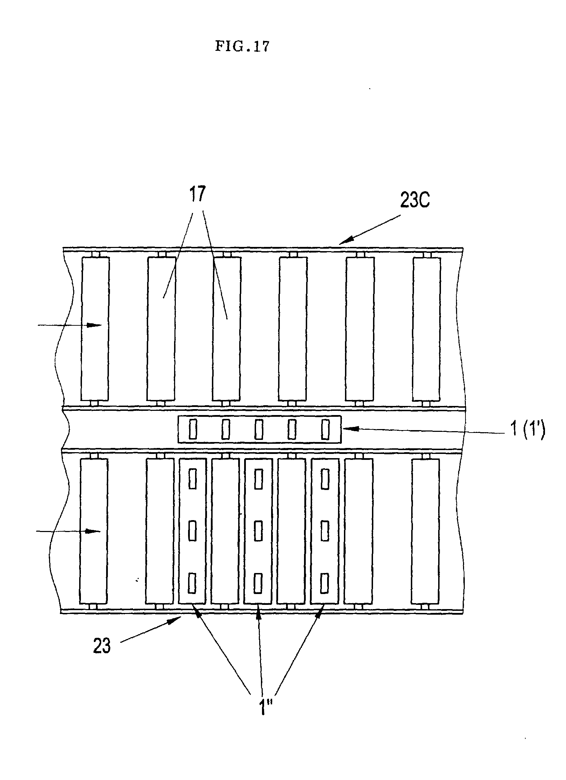

Fig. 17 schematisch in einer Draufsicht die Verwendung von zu den Tragrollen parallel eingebauten Modulen inklusive eines zwischen zwei Förderstrecken längs eingebauten Moduls bei der Überführung von Fördergut unter 90° auf eine parallele Förderstrecke.

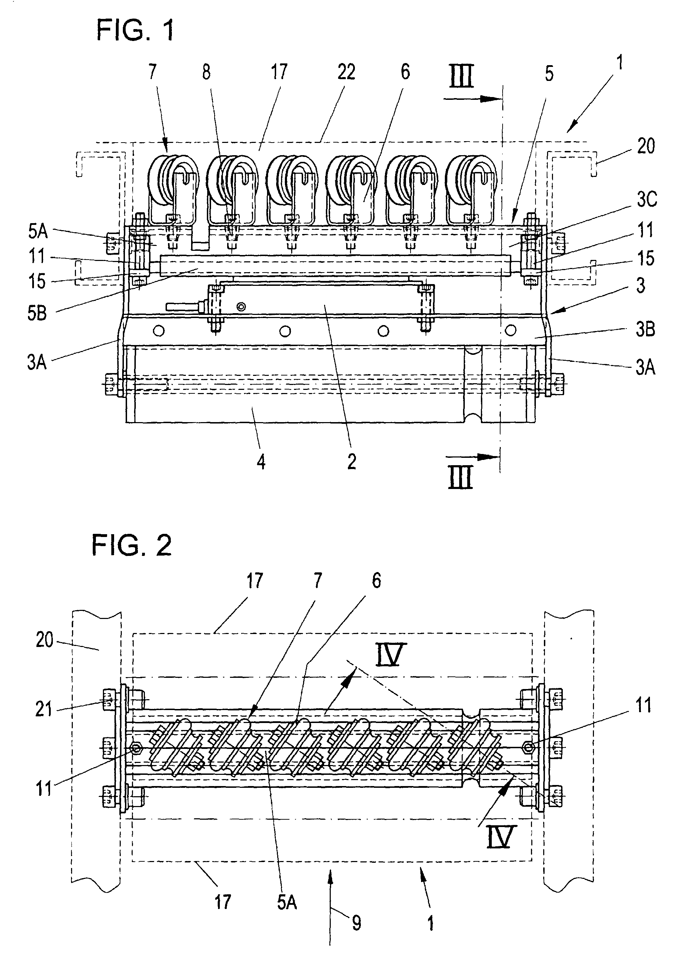

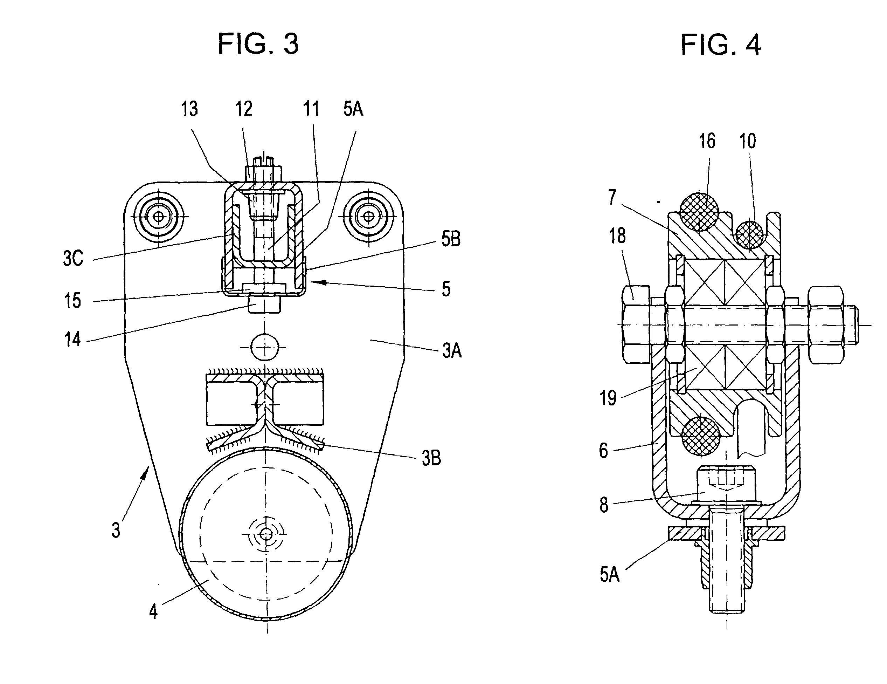

In Fig. 1 und 2 ist eine Ablenkvorrichtung in Form eines Moduls 1 mit einem Hubantrieb 2 in einer Ansicht (Stirnansicht) bzw. Draufsicht dargestellt. Das (bzw. jedes) Modul 1 hat einen eigenen Modul-Rahmen 3, in dem eine Antriebsrolle 4 drehbar gelagert ist. Der Modul-Rahmen 3 weist beim gezeigten Ausführungsbeispiel im Wesentlichen zwei Seitenteile 3A, einen Grundträger 3B und eine obere Querstrebe 3C auf, vgl. außer Fig. 1 auch Fig. 3. Auf der Querstrebe 3C sitzt ein höhenbeweglicher Träger 5, der aus zwei ineinander verschiebbaren U-Profilen 5A, 5B besteht, wobei das obere U-Profil 5A in seiner untersten Position auf der oberen Querstrebe 3C des Modul-Rahmens 3 aufsitzen kann. Auf dem oberen U-Profil 5A sind Halterungen 6 für Röllchen 7 über vertikale Schrauben oder Bolzen 8 angebracht, so dass sie in ihrer Schrägstellung zur Förderrichtung (die gemäß der Darstellung in Fig. 1 senkrecht zur Zeichenebene verläuft, vgl. auch den Pfeil 9 in Fig. 2) einzeln eingestellt werden können.

Der Träger 5 kann bei entsprechender Ansteuerung über den Hubantrieb 2, z.B. einen Balgzylinder, gehoben und gesenkt und somit in seiner Höhenlage relativ zum Rahmen 3 verändert werden. Die Ansteuerung des Hubantriebs 2 erfolgt z.B. in an sich bekannter Weise über ein nicht näher veranschaulichtes Druckluftaggregat mit Druckluftreservoir und Ventilen.

Die Röllchen 7 werden über Rundriemen 10 (in Fig. 1 und 2 nicht dargestellt, vgl. aber Fig. 4), die sowohl rutschsicher auf der Antriebsrolle 4 als auch in Nuten der Röllchen 7 liegen, angetrieben. Zur besseren Führung der Rundriemen 10 können auch in der Antriebsrolle 4 Nuten oder Sicken (nicht gezeigt) vorgesehen sein.

In Fig. 2 ist das Modul 1 in einer Draufsicht gezeigt. Dabei erkennt man die Schrägstellung der Halterungen 6, in denen die Röllchen 7 frei drehbar gelagert sind, unter einem Winkel von z.B. ca. 35° relativ zur Förderrichtung 9.

Die Endposition des Trägers 5 im angehobenen Zustand kann mit Hilfe von seitlichen Einstellschrauben 11 festgelegt werden.

Fig. 3 zeigt einen Querschnitt gemäß der Schnittlinie III-III in Fig.1. Dabei ist zu erkennen, dass der Grundträger 3B mittels Schweißnähten fest mit den Seitenteilen 3A des Modul-Rahmens 3 verbunden ist. Die oberste Position des oberen Trägerprofils 5A ist durch die Schrauben 11 festgelegt, die zwischen zwei Muttern 12, 13 das obere Trägerprofil 5A aufnehmen, und die durch Öffnungen in mit den Seitenteilen 3A fest verbundenen Vorsprüngen 15 (vgl. Fig.1) hindurchgeführt sind, wodurch die Schraubenköpfe 14 in einer obersten Position an den Vorsprüngen 15 anschlagen und somit eine Höhenbegrenzung bewirken. Die unterste Position ist durch das Aufsitzen des oberen Trägerprofils 5A auf der oberen Querstrebe 3C festgelegt.

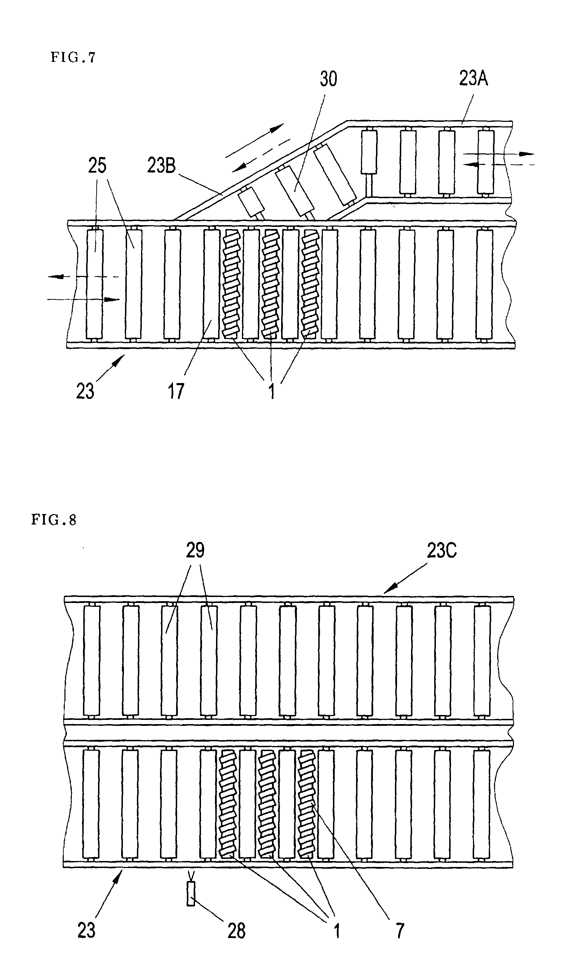

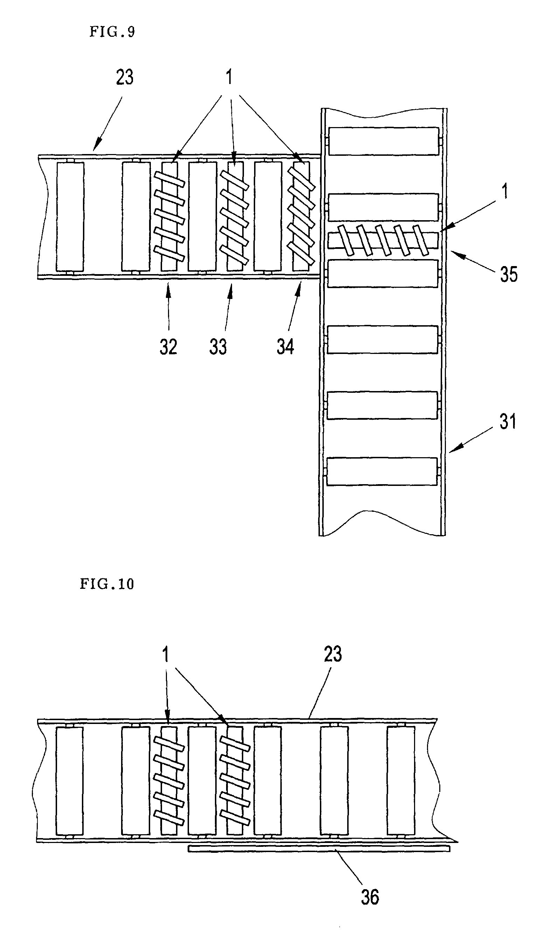

In Fig. 4 ist eine Schnittdarstellung eines Röllchens 7 gemäß der Schnittlinie IV - IV in Fig. 2 gezeigt. Die Röllchen 7 weisen O-Ringe 16 auf, die in Nuten fixiert sind, und im angehobenen Zustand des Trägers 5 ragen die Röllchen 7 mit den O-Ringen 16 über das durch die Tragrollen 17 einer zugehörigen Treibrollenbahn (in Fig.1 und 2 nur mit unterbrochenen Linien dargestellt, vgl. aber Fig. 8 und 9) definierte Niveau hinaus, und im abgesenkten Zustand des Trägers 5 kommen sie unter diesem Niveau zu liegen, so dass sie in dieser Position nicht mit dem Fördergut in Berührung kommen. Die Röllchen 7 werden über die erwähnten Rundriemen 10 angetrieben, und sie sind in den Halterungen 6 auf horizontal liegenden Achsbolzen 18 mit Hilfe von Lagern 19 gelagert. Weiters ist aus Fig. 4 ersichtlich, dass die Halterungen 6 für die Röllchen 7 bügelförmig ausgebildet sind, wobei der bereits erwähnte Bolzen 8 ein Loch in ihrem Basisteil durchsetzt und am Stegteil des oberen Trägerprofils 5A fixiert ist. Die Fixierung kann dabei derart sein, dass die Halterung 6 relativ zum oberen Trägerprofil 5A in einem vorgegebenen Winkel fest eingestellt wird, wonach der Bolzen 8 festgezogen wird, so dass die eingestellte Schrägstellung der Röllchen 7 relativ zur Förderrichtung 9 danach fest bleibt. Bei einem Abändern der Fördereinrichtung bzw. bei anderen Ablenk-Anforderungen kann die Schrägstellung der Röllchen 7 entsprechend mit Hilfe der lösbaren Bolzenbefestigung 8 geändert werden.

Das beschriebene Modul 1 kann durch Festschrauben seines eigenen Modul-Rahmens 3 in einem Basisrahmen 20 der zugehörigen Fördereinrichtung auf einfache Weise fixiert werden, wobei eine Feinjustierung im Hinblick auf die beschriebene Möglichkeit der Einstellung des Hubs der Röllchenreihe mit Hilfe der Bolzen 11 und Muttern 12, 13 möglich ist. In Fig. 1 und 2 sind entsprechende Bolzen 21 zur Befestigung des Modul-Rahmens 3 am Basisrahmen 20 veranschaulicht. Der Basisrahmen 20 der Fördereinrichtung, beispielsweise einer Treibrollenbahn, ist dabei, da er nicht zum Modul 1 gehört, nur mit strichlierten Linien veranschaulicht.

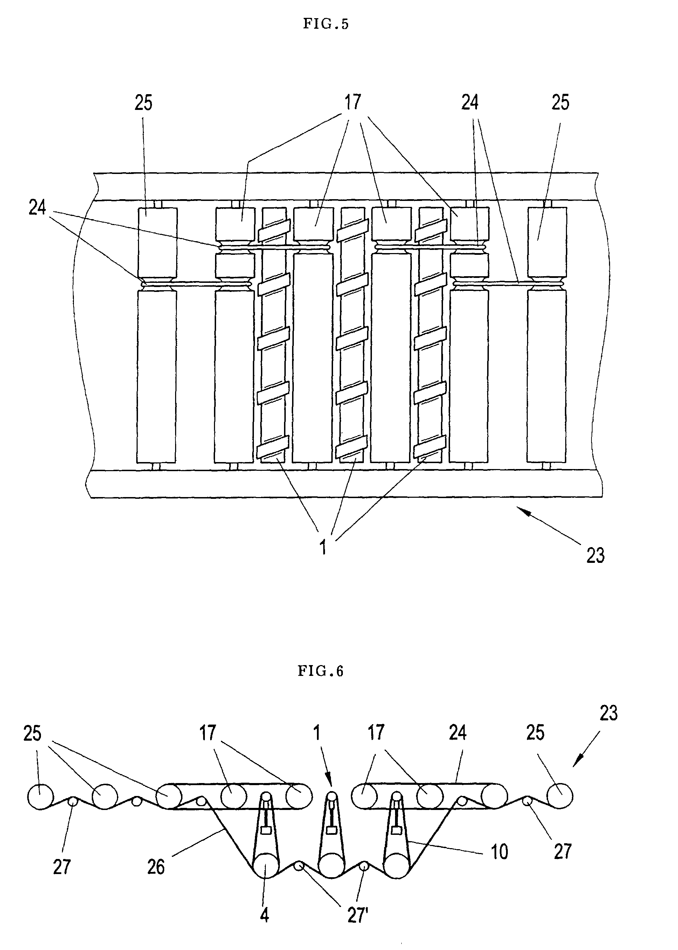

Fig. 5 zeigt als Beispiel für eine Fördereinrichtung eine Treibrollenbahn 23, wobei drei Module 1 jeweils zwischen zwei Tragrollen 17 der Treibrollenbahn 23 angeordnet sind. Die Treibrollen 17, welche den Modulen 1 unmittelbar benachbart angeordnet sind, sind als Sickenrollen ausgeführt, um einen sicheren Antrieb über Rundriemen 24 zu ermöglichen. Die übrigen Treibrollen 25 werden von einem Flachriemen 26 (s. Fig. 6) angetrieben, der zugleich die Antriebsrollen 4 der Module 1 antreibt.

In Fig. 6 ist die Treibrollenbahn 23 mit den drei Modulen 1 in einem ganz schematischen Längsschnitt dargestellt. Dabei erkennt man den Verlauf des Flachriemens 26. In den Bereichen der Treibrollenbahn 23, in denen keine Modulelemente 1 angebracht sind, ist zwischen zwei Treibrollen 25 jeweils eine Spann- oder Umlenkrolle 27 angebracht, die den Flachriemen 26 zu einem derartigen Verlauf zwingt, dass genügend Anpresskraft des Flachriemens 26 auf die untere Umfangsseite der Treibrollen 25 vorhanden ist, um diese anzutreiben und ein Durchrutschen zu verhindern. In den Bereichen, in denen in der Treibrollenbahn 23 die Module 1 vorgesehen sind, wird der Flachriemen 26 nach unten zu den jeweiligen Antriebsrollen 4 der Module 1 geführt. Zwischen den Antriebsrollen 4 der Module 1 sind wiederum Spann- bzw. Umlenkrollen 27' vorgesehen, um den für den Reibtrieb nötigen Umschlingungswinkel des Flachriemens 26 um die Antriebsrollen 4 zu erreichen. Die Treibrollen 17 der Treibrollenbahn 23, die den Modulen 1 benachbart sind, und somit nicht vom Flachriemen 26 angetrieben werden können, sind wie erwähnt als Sickenrollen ausgeführt und werden über die Rundriemen 24 von den nächstgelegenen, vom Flachriemen 26 angetriebenen Treibrollen 25 angetrieben.

In Fig. 7 ist die Verwendung von drei Modulen 1 in einer Treibrollenbahn 23 dargestellt, bei der das Fördergut über eine um ca. 30° zur ursprünglichen Förderrichtung schräggestellte Strecke 23B und von dort zu einem parallelen Förderer 23A überführt wird, vgl. auch die durch die voll eingezeichneten Pfeile in Fig. 10 angedeuteten Förderrichtungen. Die gezeigte Anordnung kann jedoch auch dazu verwendet werden, Fördergut aus der Förderstrecke 23A in einen Fördergutstrom auf dem Förderer 23 in Zwischenräumen zwischen einzelnen Fördergütern auf dem Förderer 23 einzuschleusen, was durch die gestrichelt gezeichneten Pfeile in Fig. 10 angedeutet ist. Wenn kein derartiges Aus- und oder Einschleusen von Fördergut beabsichtigt ist, werden die Röllchen 7 der einzelnen Reihen der Module 1 wie vorstehend anhand der Fig. 1 bis 3 beschrieben abgesenkt, so dass der obere Rand der O-Ringe 16 der Röllchen 7 unterhalb der Förderebene 22 (Fig. 1) zu liegen kommt.

Fig. 8 zeigt die Verwendung von z.B. drei Modulen 1 zur Überführung von Fördergut auf eine zum ursprünglichen Förderer 23 parallele Förderstrecke 23C. Dabei ist die Verwendung von ein (bis drei) Triggerlichtschranken 28 zur Ansteuerung der Hubantriebe 2, z.B. eines Balgzylinders oder dergleichen (s. Fig. 1), vorgesehen. Jedes Modul 1 besitzt einen eigenen Hubantrieb 2, und es ist möglich, alle Module 1 auf einmal anzusteuern, um die Röllchen 7 anzuheben und das Fördergut auszusteuern, es ist aber auch möglich, ein Modul 1 nach dem anderen über gesonderte Triggerlichtschranken 28 entsprechend anzusteuern, wobei der Durchsatz erhöht werden kann. Die Hubantriebe 2 der aufeinanderfolgenden Module 1 können überdies auch - mit einer jeweiligen zeitlichen Verzögerung, die an die Fördergeschwindigkeit angepasst ist - von einer einzigen Triggerlichtschranke 28 her angesteuert werden. Darüber hinaus ist es von Vorteil, wenn die Treibrollen 29 der parallelen Förderstrecke 23C gummiert sind, um ein zusätzliches Abziehen des Fördergutes zu ermöglichen.

In ähnlicher Weise sind vorzugsweise auch zumindest die schrägen Treibrollen 30 der schrägen Förderstrecke 23B von Fig. 7 gummiert.

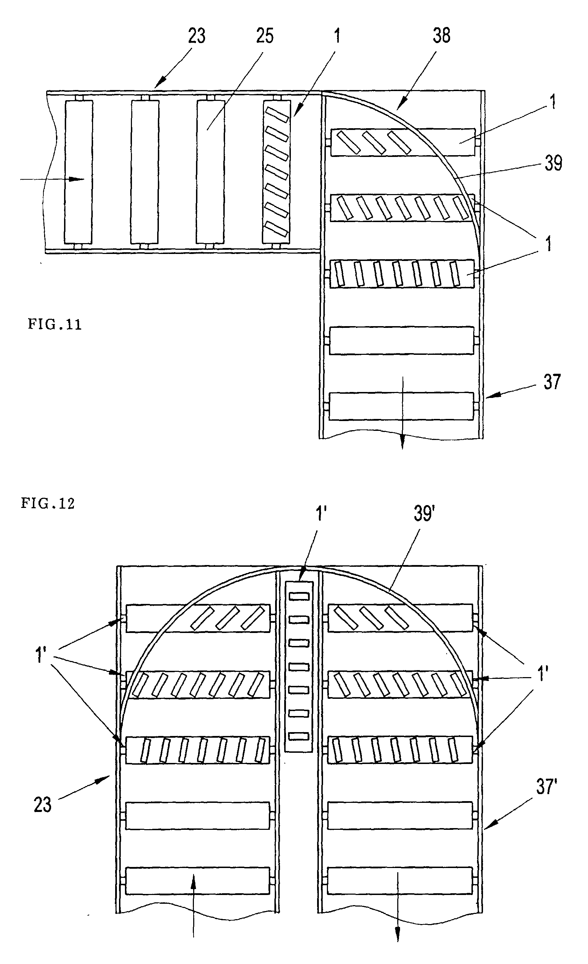

In Fig. 9 ist eine Draufsicht auf eine Treibrollenbahn 23 gezeigt, in der die Verwendung von Modulen 1 zur Umlenkung des Fördergutes um 90° und zum Abschieben auf eine zur ursprünglichen Förderstrecke 23 rechtwinkelige Förderstrecke 31 gezeigt ist. Im Besonderen zeigt die Fig. 12, dass hintereinander angeordnete Module 1 nicht die gleiche Schrägstellung aufweisen müssen. So ist in diesem Ausführungsbeispiel gezeigt, dass die Schrägstellung an der Stelle 32 geringer ist als jene an der Stelle 33, die wiederum geringer ist als an der Stelle 34, um so insgesamt ein sanftes, allmähliches Ablenken des Fördergutes zu bewirken. Darüber hinaus ist es ebenfalls möglich, Module 1 in der Treibrollenbahn 31, auf welche das Fördergut überführt wird, anzubringen, wie dies an der Stelle 35 vorgesehen ist. Denkbar ist es hier auch, an der Stelle 32, 33 und 34 Module 1' mit in der Höhe fest eingestellten Röllchen 7 einzusetzen.

In Fig. 10 ist die Verwendung von Modulen 1 zur Verschiebung des Fördergutes zu der einen oder anderen Längsseite der Treibrollenbahn 23 hin in einer Draufsicht dargestellt. Dies kommt häufig vor, wenn das Fördergut bestimmte Mindestabstände zu einer Seite hin einnehmen muss, z.B um einen am Fördergut vorhandenen Barcode oder dergleichen zu detektieren, und/oder wenn Produkte unterschiedlicher Breite gefördert werden. Auf jener Längsseite, zu der hin die Verschiebung des Fördergutes erfolgt, ist gegebenenfalls eine zusätzliche Anschlageinrichtung 36, z.B. eine Schiene, vorgesehen.

In Fig. 11 ist schematisch die Realisierung einer 90°-Kurve mit Hilfe von Modulen 1 veranschaulicht. Dabei schließt an eine zufördernde Treibrollenbahn 23 mit Treibrollen 25 eine das Fördergut weiterfördernde Treibrollenbahn 37 im rechten Winkel an, und im Kurvenbereich 38 sind einerseits an der Treibrollenbahn 23 und andererseits an der Treibrollenbahn 37 Module 1 angeordnet. Im Hinblick darauf, dass hier eine feste Kurve für das Fördergut realisiert werden soll, können aber selbstverständlich auch Module 1' mit fester Röllchenhöhe (s. Fig. 5 bis 7) eingebaut werden. Im Kurvenbereich 38 kann an der Kurvenaußenseite noch eine Anschlag- und Führungsschiene 39 vorgesehen sein.

In Fig. 12 ist sodann gezeigt, dass in Weiterbildung der "Kurve" gemäß Fig. 11 eine "180°-Kehre" mit Hilfe der Modulelemente 1 bzw. 1' realisiert werden kann. Vorzugsweise ist zumindest das mit seiner Längsausrichtung zwischen den beiden Förderstrecken 23 und 37' angeordnete Modul insofern zu modifizieren, als es seinen Antrieb über gesonderte Riemen von den anderen Modulen 1' innerhalb der Tragrollenbahn 23 oder 37' erhalten muss. Weiters ist wiederum eine Begrenzungs- und Führungsschiene 39' im Bereich der Kehre vorgesehen.

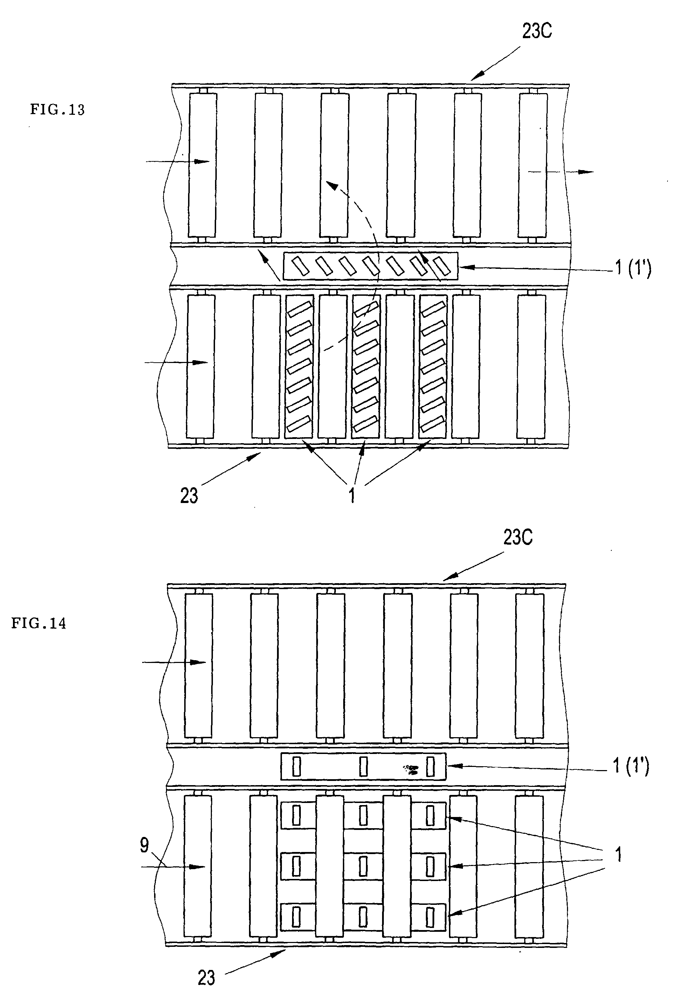

In Fig. 13 ist eine Weiterbildung der Anordnung gemäß Fig. 8 gezeigt, wobei das Fördergut von der einen Treibrollenbahn 23 auf eine dazu parallel verlaufende Treibrollenbahn 23C überschoben wird. Dadurch, dass zwischen den beiden Treibrollenbahnen 23, 23C wiederum ein längsangeordnetes Modul 1 bzw. 1' angeordnet wird, können die von der Treibrollenbahn 23 über die dort eingebauten Module 1 abgeschobenen Fördergüter - bei der entsprechenden, in Fig. 13 schematisch angedeuteten Ausrichtung der Röllchen - um ihre vertikale Achse gewendet, d.h. um 180° verdreht werden, so dass sie dann auf der Treibrollenbahn 23C mit ihrer ursprünglichen Rückseite nach vorne gewendet weitertransportiert werden, s. auch die Pfeile in Fig. 13.

Des Weiteren kann gemäß Fig. 14 ein 90°-Abschieben von einer Treibrollenbahn 23 auf eine dazu parallele Treibrollenbahn 23C auch mit Hilfe von unter 90° zur Förderrichtung eingestellten Röllchen an eingebauten Modulen 1 vorgesehen werden, wobei in diesem Zusammenhang in Fig. 14 auch angedeutet ist, dass wiederum zwischen den beiden Treibrollenbahnen 23, 23C ein längsangeordnetes Modul 1 bzw. 1' vorhanden sein kann, um das Abschieben des Fördergutes zu unterstützen. Dabei sind sowohl die Röllchen der Module 1 in der Treibrollenbahn 23 als auch die Röllchen des längsangeordneten Moduls 1 bzw. 1' zwischen den beiden Treibrollenbahnen 23, 23C derart eingestellt, dass ihre Drehachsen parallel zur Förderrichtung 9 verlaufen, d.h. die Röllchen haben einen Winkel von 90° zur Förderrichtung 9.

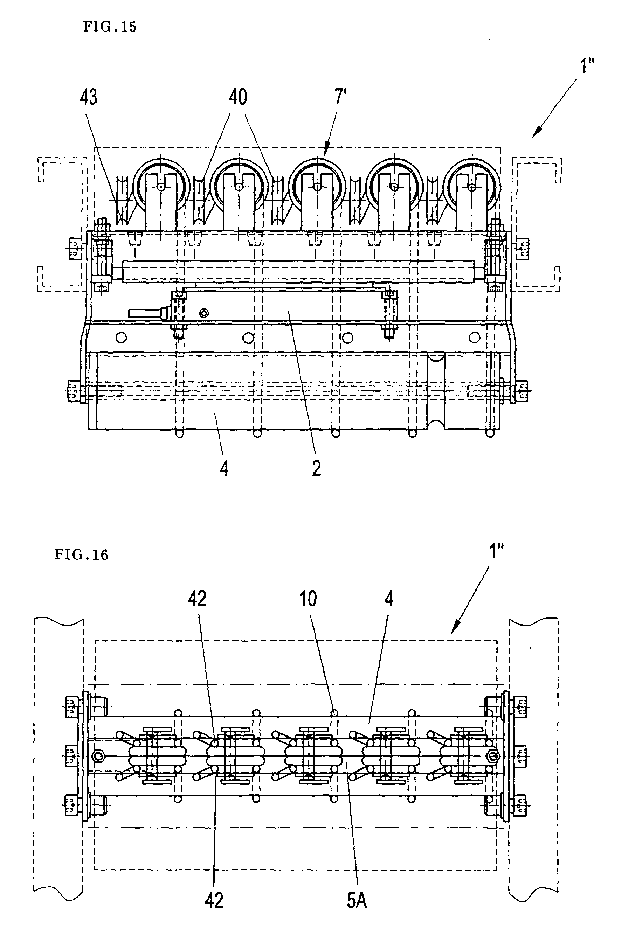

In den Fig. 15, 16 ist ein modifiziertes Modul 1'' gezeigt, das weitgehend jenem gemäß Fig. 1 bis 3 entspricht, wobei jedoch zusätzliche Umlenkröllchen 40 jeweils zwischen zwei Ablenkrollen 7' angebracht sind, damit die Rundriemen 10 nicht mit dem Träger 5 in Berührung kommen. Die Ablenkröllchen 7' weisen an beiden Umfangsaußenseiten eine Nut 42 für die Führung der Rundriemen 10 auf, die ebenfalls im unteren Umfangsteil 43 der Umlenkröllchen 40 aufliegen und somit umgelenkt werden.

Schließlich kann gemäß Fig. 20 ein 90°-Abschieben von einer Treibrollenbahn 23 auf eine dazu parallele Treibrollenbahn 23C auch mit Hilfe von unter 90° zur Förderrichtung eingestellten Röllchen an eingebauten Modulen 1'' vorgesehen werden, wobei die Module 1'' parallel zu den übrigen Treibrollen eingebaut sind. In diesem Zusammenhang ist auch ähnlich wie in Fig. 14 angedeutet, dass wiederum zwischen den beiden Treibrollenbahnen 23, 23C ein längs angeordnetes Modul 1 bzw. 1' vorhanden sein kann, um das Abschieben des Fördergutes zu unterstützen.

## Patentansprüche

1. Ablenkvorrichtung (1, 1') für eine, eine Förderebene definierende, einen Basisrahmen (20) aufweisende Fördereinrichtung zum Ablenken von Fördergütern, mit antreibbaren Ablenk-Röllchen (7), die auf einem gemeinsamen, mit Hilfe eines Hubantriebs (2) höhenverstellbar angeordneten Träger (5) angebracht sind, **dadurch gekennzeichnet, dass** der Träger (5) mit den in einer Reihe angeordneten Röllchen (7) und der Hubantrieb (2) sowie eine den Röllchen (7) zugeordnete Antriebsrolle (4) zur Bildung eines gesonderten Moduls in einem eigenen, zur Verbindung mit dem Basisrahmen (20) der Fördereinrichtung eingerichteten Modul-Rahmen (3) angeordnet sind.

2. Ablenkvorrichtung nach Anspruch 1, **dadurch gekennzeichnet, dass** als Fördereinrichtung eine Treibrollenbahn vorgesehen ist.

3. Ablenkvorrichtung nach Anspruch 1 oder 2, **dadurch gekennzeichnet, dass** zwischen dem Röllchen-Träger (5) und der Antriebsrolle (4) ein den Hubantrieb (2) tragender Grundträger (3B) fest angebracht ist.

4. Ablenkvorrichtung nach einem der Ansprüche 1 bis 3, **dadurch gekennzeichnet, dass** als Hubantrieb (2) für das Heben bzw. Senken des Trägers (5) mit der Röllchenreihe zumindest ein Balgzylinder vorgesehen ist, der auf dem mit dem Modul-Rahmen (3) fest verbundenen Grundträger (3B) befestigt ist.

5. Ablenkvorrichtung nach einem der Ansprüche 1 bis 4, **dadurch gekennzeichnet, dass** für die Röllchen (7) ein Rundriemenantrieb vorgesehen ist, wobei die Rundriemen (10) je über ein Röllchen (7) sowie über die im Modul-Rahmen (3) drehbar gelagerte Antriebsrolle (4) laufen.

6. Ablenkvorrichtung nach einem der Ansprüche 2 bis 5, **dadurch gekennzeichnet, dass** für den Antrieb der Antriebsrolle (4) ein Antriebsriemen (26) vorgesehen ist, der auch die Treibrollen (25) der Treibrollenbahn (23) antreibt.

7. Ablenkvorrichtung nach Anspruch 6, **dadurch gekennzeichnet, dass** als Antriebsriemen (26) ein Flachriemen vorgesehen ist.

8. Ablenkvorrichtung nach einem der Ansprüche 1 bis 7, **dadurch gekennzeichnet, dass** die Röllchen (7) am Umfang einen O-Ring (16) aufweisen.

9. Ablenkvorrichtung nach einem der Ansprüche 1 bis 8, **dadurch gekennzeichnet, dass** die der Ablenkvorrichtung (1; 1') benachbarten Tragrollen (17) Sickenrollen sind, die über Rundriemen (24) angetrieben werden.

10. Ablenkvorrichtung nach einem der Ansprüche 1 bis 9, **dadurch gekennzeichnet, dass** die Endpositionen des Trägers (5) durch mit dem Modul-Rahmen (3) verbundene einstellbare Anschläge (3C) definiert sind.

11. Ablenkvorrichtung nach einem der Ansprüche 1 bis 10, **dadurch gekennzeichnet, dass** mehrere Ablenkvorrichtungen (1) mit voneinander unabhängig höhenverstellbar angebrachten Trägern (5) in eigenen Modul-Rahmen (3) vorgesehen sind.

12. Ablenkvorrichtung nach einem der Ansprüche 1 bis 10, **dadurch gekennzeichnet, dass** der bzw. jeder Ablenkvorrichtung (1) eine Triggerlichtschranke (28) zur Ansteuerung des Hubantriebs (2) des Trägers (5) zugeordnet ist.

13. Ablenkvorrichtung nach einem der Ansprüche 1 bis 12, **dadurch gekennzeichnet, dass** eine gemeinsame Triggerlichtschranke (28) zur gegebenenfalls zeitlich aufeinanderfolgenden Ansteuerung der Hubantriebe (2) der Träger (5) von mehreren Ablenkvorrichtungen (1) vorgesehen ist.

14. Ablenkvorrichtung nach einem der Ansprüche 1 bis 13, **dadurch gekennzeichnet, dass** die Röllchen (7) um zu ihren Drehachsen senkrechte Achsen verdrehbar am Träger (5) angebracht und so unter verstellbaren Winkeln einstellbar sind.

15. Ablenkvorrichtung nach einem der Ansprüche 1 bis 14, **dadurch gekennzeichnet, dass** die Röllchen (7) in einer Normal-Betriebsstellung einen Winkel zur Förderrichtung (9) von ca. 35° aufweisen.

16. Verwendung der Ablenkvorrichtung nach einem der Ansprüche 1 bis 15 zum Aus- oder Einschleusen des Förderguts über eine zur Treibrollenbahn (23) schräge Förderstrecke (23B).

17. Verwendung der Ablenkvorrichtung nach einem der Ansprüche 1 bis 15 zum Überschieben des Fördergutes auf eine zur ursprünglichen Treibrollenbahn (23) parallel verlaufende Rollenbahn (23C).

18. Verwendung der Ablenkvorrichtung nach einem der Ansprüche 1 bis 15 zum Abschieben oder Einschleusen des Fördergutes in einer zur Förderrichtung (9) der Treibrollenbahn (23) im Wesentlichen rechtwinkelig verlaufenden Richtung.

19. Verwendung der Ablenkvorrichtung nach einem der Ansprüche 1 bis 15 zum Verschieben des Fördergutes zu einer bestimmten Längsseite der Treibrollenbahn (23) hin.

20. Verwendung der Ablenkvorrichtung nach Anspruch 19, wobei auf der Längsseite zu der hin die Verschiebung des Fördergutes erfolgt, eine Anschlageinrichtung (36) vorgesehen ist.

21. Verwendung der Ablenkvorrichtung nach Anspruch 20, wobei als Anschlageinrichtung (36) eine Schiene vorgesehen ist.

22. Verwendung der Ablenkvorrichtung nach einem der Ansprüche 1 bis 15 zur Bildung eines Kurvenbereichs (38) als Übergang zwischen zwei unter einem Winkel zueinander angeordneten Förderstrecken (23, 37 bzw. 37').

23. Verwendung der Ablenkvorrichtung nach Anspruch 22, **dadurch gekennzeichnet, dass** die Förderstrecken (23, 37) unter einem Winkel von 90° zueinander angeordnet sind.

24. Verwendung der Ablenkvorrichtung nach Anspruch 22, **dadurch gekennzeichnet, dass** die Förderstrecken (23, 37) unter einem Winkel von 180° zueinander angeordnet sind.

25. Verwendung der Ablenkvorrichtung nach einem der Ansprüche 1 bis 15 zum Wenden des Fördergutes um 180° um seine vertikale Achse, wobei eine Ablenkvorrichtung (1; 1') mit seinem Träger parallel zur Haupt-Förderrichtung (9) zwischen zwei parallelen Förderstrecken (23, 23C) angeordnet ist.

## Claims

1. A deviation device (1, 1') for a conveyor for deviating conveyed goods, said conveyor defining a conveying plane and including a basic frame (20), said device comprising drivable deviation rollers (7) attached to a common carrier (5) which is adjustable in terms of height by means of a lifting drive (2), **characterized in that** the carrier (5) with the rollers (7) arranged in a row therein and the lifting drive (2) as well as a driving roller (4) associated with the rollers (7) are arranged in a separate module frame (3) adapted to be connected with the basic frame (20) of the conveyor so as to form a separate module.

2. A deviation device according to claim 1, **characterized in that** a driving roller path is provided as conveyor.

3. A deviation device according to claim 1 or 2, **characterized in that** a basic carrier (3B) carrying a lifting drive (2) is fixed between the roller carrier (5) and the driving roller (4).

4. A deviation device according to any one of claims 1 to 3, **characterized in that** at least one lifting cylinder is provided as the lifting drive (2) for a respective lifting and lowering of the carrier (5) comprising the row of rollers, which lifting cylinder is fastened to the basic carrier (3B) that is fixed to the module frame (3).

5. A deviation device according to any one of claims 1 to 4, **characterized in that** a round belt drive is provided for the rollers (7), each round belt (10) running over a roller (7) as well as over the driving roller (4) rotatably mounted in the module frame (3).

6. A deviation device according to any one of claims 2 to 5, **characterized in that** a drive belt (26) is provided for driving the driving roller (4), which drive belt also drives the driving rollers (25) of the driving roller path (23).

7. A deviation device according to claim 6, **characterized in that** a flat belt is provided as the drive belt (26).

8. A deviation device according to any one of claims 1 to 7, **characterized in that** the rollers (7) comprise an O-ring (16) on their periphery.

9. A deviation device according to any one of claims 1 to 8, **characterized in that** the carrying rollers (17) neighboring the deviation device (1; 1') are bead rollers which are driven via round belts (24).

10. A deviation device according to any one of claims 1 to 9, **characterized in that** the end positions of the carrier (5) are defined by adjustable stops (3C) connected with the module frame (3).

11. A deviation device according to any one of claims 1 to 10, **characterized in that** several deviation module elements (1) comprising carriers (5) arranged to be adjustable in terms of height independently of each other are provided in separate module frames (3).

12. A deviation device according to any one of claims 1 to 10, **characterised in that** the or each deviation device (1) has an associated trigger light barrier (28) for controlling the lifting drive (2) of the carrier (5).

13. A deviation device according to any one of claims 1 to 12, **characterised in that** a common trigger light barrier (28) is provided for an optionally temporally consecutive control of the lifting drives (2) of the carriers (5) of several deviation devices (1).

14. A deviation device according to any one of claims 1 to 13, **characterised in that** the rollers (7) are arranged on the carrier (5) so as to be rotatable about axes extending perpendicularly to their axes of rotation and thus are adjustable under adjustable angles.

15. A deviation device according to any one of claims 1 to 14, **characterised in that** the rollers (7) in a normal operating position have an angle of approximately 35° relative to the conveying direction (9).

16. The use of a deviation device according to any one of claims 1 to 15 for moving out or introducing the conveyed goods via a conveying path (23B) extending obliquely relative to the driving roller path (23).

17. The use of a deviation device according to any one of claims 1 to 15 for shifting the conveyed goods onto a roller path (23C) extending in parallel to the original driving roller path (23).

18. The use of a deviation device according to any one of claims 1 to 15 for pushing off or introducing the conveyed goods in a direction extending substantially at right angles relative to the conveying direction (9) of the driving roller path (23).

19. The use of a deviation device according to any one of claims 1 to 15 for shifting the conveyed goods towards a certain longitudinal side of the driving roller path (23).

20. The use of a deviation device according to claim 19, wherein a stop device (36) is provided on that longitudinal side towards which the conveyed goods are shifted.

21. The use of a deviation device according to claim 20, wherein a rail is provided as the stop device (36).

22. The use of a deviation device according to any one of claims 1 to 15 for establishing a curve region (38) as a transition between two conveying paths (23, 37, and 37', respectively) which are arranged under an angle relative to each other.

23. The use of a deviation device according to claim 22, **characterised in that** the conveying paths (23, 37) are arranged under an angle of 90° relative to each other.

24. The use of a deviation device according to claim 22, **characterised in that** the conveying paths (23, 37) are arranged under an angle of 180° relative to each other.

25. The use of the deviation device according to any one of claims 1 to 15 for turning the conveyed goods by 180° about their vertical axes, wherein a deviation device (1; 1') is arranged with its carrier in parallel to the main conveying direction (9) between two parallel conveying paths (23, 23C).

## Revendications

1. Dispositif de déviation (1, 1') pour un dispositif de convoyage, définissant un plan de convoyage et comportant un cadre de base (20) pour dévier des produits à convoyer, comportant des roulettes de déviation (7) pouvant être entraînées, qui sont montées sur un support commun (5) disposé de façon à être réglable en hauteur à l'aide d'un dispositif d'entraînement de,levage (2), **caractérisé en ce que** le support (5), équipé des roulettes (7) disposées suivant un rangée, et le dispositif d'entraînement de levage (2) ainsi qu'un rouleau d'entraînement (4) associé aux roulettes (7) sont disposés de manière à former un module particulier dans un cadre proprement dit de module (3) agencé de manière à être relié au cadre de base (20) du dispositif de convoyage.

2. Dispositif de déviation selon la revendication 1, **caractérisé en ce qu'**il est prévu, comme dispositif de convoyage, un transporteur à rouleaux d'entraînement.

3. Dispositif de déviation selon la revendication 1 ou 2, **caractérisé en ce qu'**un support de base (3B), qui porte le dispositif d'entraînement de levage (2), est monté fixe entre le support (5) des roulettes et le rouleau d'entraînement (4).

4. Dispositif de déviation selon l'une des revendications 1 à 3, **caractérisé en ce qu'**il est prévu, comme dispositif d'entraînement de levage (2) pour le soulèvement et l'abaissement du support (5) équipé d'une rangée de roulettes, au moins un cylindre à soufflet, qui est fixé sur le corps de base (3B) relié de façon fixe au cadre de module (3).

5. Dispositif de déviation selon l'une des revendications 1 à 4, **caractérisé en ce que** pour les roulettes (7) il est prévu un dispositif d'entraînement à courroies cylindriques, les courroies cylindriques (10) circulant respectivement sur une roulette (7) ainsi que sur le rouleau d'entraînement (4) monté rotatif dans le cadre de module (3).

6. Dispositif de déviation selon l'une des revendications 2 à 5, **caractérisé en ce que** pour l'entraînement du rouleau d'entraînement (4) il est prévu une courroie d'entraînement (26), qui entraîne également les rouleaux d'entraînement (25) du transporteur à rouleaux d'entraînement (23).

7. Dispositif de déviation selon la revendication 6, **caractérisé en ce qu'**il prévu comme courroie d'entraînement (26), une courroie plate.

8. Dispositif de déviation selon l'une des revendications 1 à 7, **caractérisé en ce que** les roulettes (7) possèdent sur la périphérie un joint torique (16).

9. Dispositif de déviation selon l'une des revendications 1 à 8, **caractérisé en ce que** les rouleaux de support (17), qui sont voisins du dispositif de déviation (1; 1'), sont des rouleaux moulurés, qui sont entraînés au moyen de courroies cylindriques (24).

10. Dispositif de déviation selon l'une des revendications 1 à 9, **caractérisé en ce que** les positions d'extrémité du support (5) sont définies par des butées réglables (3C) qui sont reliées au cadre de module (3).

11. Dispositif de déviation selon l'une des revendications 1 à 10, **caractérisé en ce que** plusieurs dispositifs de déviation (1) sont pourvus de supports (5) montés de manière à être réglables en hauteur de façon indépendante les uns des autres, dans un module de cadre particulier (3).

12. Dispositif de déviation selon l'une des revendications 1 à 10, **caractérisé en ce qu'**au ou à chaque dispositif de déviation (1) est associé un relais photoélectrique de déclenchement (28) servant à commander le dispositif d'entraînement de levage (2) du support (5).

13. Dispositif de déviation selon l'une des revendications 1 à 12, **caractérisé en ce qu'**un relais photoélectrique commun de déclenchement (28) est prévu pour la commande, éventuellement successive dans le temps, des dispositifs de levage (2) des supports (5) de plusieurs dispositifs de déviation (1).

14. Dispositif de déviation selon l'une des revendications 1 à 13, **caractérisé en ce que** les roulettes (7) sont montées de manière à pouvoir tourner, sur le support (5), autour d'axes perpendiculaires à leurs axes de rotation, et sont réglables ainsi selon des angles réglables.

15. Dispositif de déviation selon l'une des revendications 1 à 14, **caractérisé en ce que** les roulettes (7) font, dans une position de fonctionnement normale, un angle d'environ 35° par rapport à la direction de convoyage (9).

16. Utilisation du dispositif de déviation selon l'une des revendications 1 à 15 pour le transfert de sortie ou d'entrée, par un sas, du produit à convoyer sur une section de convoyage (23B) oblique par rapport à la table à rouleaux d'entraînement (23).

17. Utilisation du dispositif de déviation selon l'une des revendications 1 à 15 pour le transfert du produit à convoyer sur une table à rouleaux (23C), qui s'étend parallèlement à la table à rouleaux d'entraînement initiale (23).

18. Utilisation du dispositif de déviation selon l'une des revendications 1 à 15 pour déposer ou introduire par un sas le produit à convoyer dans une direction qui s'étend essentiellement à angle droit par rapport à la direction de convoyage (9) de la table à rouleaux d'entraînement (23).

19. Utilisation du dispositif de déviation selon l'une des revendications 1 à 15 pour déplacer le produit à convoyer en direction d'un côté longitudinal déterminé de la table à rouleaux d'entraînement (23).

20. Utilisation du dispositif de déviation selon la revendication 19, dans lequel un dispositif de butée (36) est prévu sur le côté longitudinal, vers lequel s'effectue le décalage du produit à convoyer.

21. Utilisation du dispositif de déviation selon la revendication 20, dans lequel un rail est prévu en tant que dispositif de butée (36).

22. Utilisation du dispositif de déviation selon l'une des revendications 1 à 15 pour la formation d'une partie courbe (38) en tant que jonction entre deux sections de convoyage (23, 37 ou 37') disposée de manière à faire un angle entre elles.

23. Utilisation du dispositif de déviation selon la revendication 22, **caractérisé en ce que** les sections de convoyage (23, 37) sont disposées en faisant entre elles un angle de 90°.

24. Utilisation du dispositif de déviation selon la revendication 22, **caractérisé en ce que** les sections de convoyage (23, 37) sont disposées de manière à faire entre elles un angle de 180°.

25. Utilisation du dispositif de déviation selon l'une des revendications 1 à 15 pour faire pivoter le produit à convoyer, sur 180° autour de son axe vertical, un dispositif de déviation (1; 1') étant disposé avec son support parallèle à la direction de convoyage principale (9) entre deux sections de convoyage parallèles (23, 23C).
